# EUROPÄISCHE PATENTANMELDUNG

(11) **EP 0 872 598 A2**
(43) Veröffentlichungstag der Anmeldung: **21.10.1998**
(21) Anmeldenummer: 98106862.0
(22) Anmeldetag: 16.04.1998
(51) Int. Cl.: E03C 1/02

(54) **Kunststoffverteiler mit Gewinde**

(30) Priorität: 17.04.1997 DE 29706949 U
(71) Anmelder: Thermconcept Produkte für Heizung und Sanitär Gmbh & Co., 48282 Emsdetten (DE)
(72) Erfinder: Fehlings, Thomas, 48282 Emsdetten (DE)
(74) Vertreter: Habbel, Ludwig (Lutz)

(57) **Zusammenfassung**

Bei einem Verteiler für wasserführende Sanitärleitungssysteme, mit einem Gehäuse, welches zum Anschluß weiterer gleichartiger Gehäuse ein Spitzende und ein Muffenende aufweist sowie Gewindeanschlüsse für eine Leitung und ggf. für ein Ventil zur Regulierung der Durchflußmenge dieser Leitung, wobei das Gehäuse aus Kunststoff gefertigt ist und wobei das Gehäuse mehrere Nuten aufweist, die längs vom Stirnende zum Muffenende verlaufen, wobei die Nuten einen Hinterschneidungen aufweisenden Querschnitt aufweisen, schlägt die Erfindung vor, daß das Spitz- und das Muffenende mit korrespondierenden Schraubgewinden versehen sind, die ebenfalls aus Kunststoff bestehen.

## Beschreibung

Die Erfindung betrifft einen Verteiler nach dem Oberbegriff des Anspruches 1.

Ein derartiger Verteiler ist aus der DE 94 17 836 U1 bekannt. Er wird im Bereich der Sanitärtechnik für Kalt- und Heißwasserleitungen verwendet und ermöglicht vorteilhaft die werkzeuglose Verbindung zweier gleichartiger Verteiler miteinander sowie eine preisgünstige und gewichtsparende Ausgestaltung der Verteiler durch die Verwendung von Kunststoff.

Die den Verbund zweier benachbarter Verteiler sichernden Haltekräfte sind bei dem bekannten Verteiler jedoch zunächst zu überwinden, wenn bei einer Aufschiebebewegung das Spitzende des einen Verteilers in das Muffenendes des benachbarten Verteilers eingeführt werden soll, wobei federelastische Halteklauen gespreizt werden müssen. Diese Überwindung der Haltekräfte kann je nach Materialtoleranzen, Temperatur und momentaner Befindlichkeit des Personals als unerwünscht hoch empfunden werden, insbesondere wenn z. B. in Neubauten eine Vielzahl derartiger Verbindungen hergestellt werden muß.

Der Erfindung liegt die Aufgabe zugrunde, einen gattungsgemäßen Verteiler dahingehend zu verbessern, daß ein sicherer Verbund zwei oder mehrerer gleichartiger Verteiler ermöglicht werden soll, wobei eine möglichst einfache und kraftsparende Verbindung sowei eine preiswerte Herstellbarkeit der Verteiler vorgesehen sein soll.

Diese der Erfindung zugrundeliegende Aufgabe wird durch einen Verteiler mit den Merkmalen des Anspruches 1 gelöst.

Die Erfindung schlägt mit anderen Worten vor, die Verteiler mit einer Schraubverbindung auszugestalten. Dies ermöglicht eine schnelle und kraftsparende Verbindung zweier gleichartiger Verteiler. Dabei ist vorteilhaft und kostensparend vorgesehen, daß auch die Gewinde dieser Schraubverbindung aus Kunststoff bestehen. Der gesamte Verteiler kann aus einem einzigen Material in einem einzigen, preiswerten Spritzvorgang erstellt werden, oder er kann aus mehreren Kunststoffmaterialien bestehen, die gleichzeitig geformt und miteinander verbunden werden oder bei denen ein Material um ein zweites umspritzt wird, so daß für weniger belastete Bereiche ein preiswerteres Material verwendet werden kann als für höher belastete Bereiche.

Überraschend hat sich herausgestellt, daß die von metallischen Verteilern an sich bekannte Verwendung eines Gewindes auch bei Verteilergehäusen aus Kunststoff möglich ist, obwohl der Kunststoff stärker auf Temperaturunterschiede reagiert und dementsprechend erhebliche Verspannungen in einer Verteilerbatterie auftreten können, in der einige Verteiler von Kaltwasser und andere von Heißwasser durchströmt werden.

Ein am Ende der Dreh- oder Schraubbewegung vorgesehener Anschlag ermöglicht es dem Benutzer, zwei Verteiler sicher, auf einfache Weise und ohne umständliche Justier- und Kontrollarbeiten in eine vorteilhafte Endposition zu bringen, in der die benachbarten Verteiler miteinander fluchtend ausgerichtet sind. Gleichzeitig ist durch das für den Benutzer fühlbare Erreichen des Anschlags sichergestellt, daß die Verschraubung der Verteiler ausreichend weit erfolgt ist, so daß die Dichtigkeit und die mechanische Stabilität der Verbindung in dem gewünschten Maß sichergestellt sind.

Gegenüber einer denkbaren Verwendung zweier Vorsprünge, von denen der eine Vorsprung den Anschlag für den anderen Vorsprung bildet, ermöglicht die Schaffung einer Ausnehmung für den Vorsprung eine platzsparende Ausgestaltung des Verteilers mit einer möglichst kurzen Baulänge.

Vorteilhaft kann eine groß bemessene Nut vorgesehen sein, die mit gleichartigen Nuten benachbarter Verteiler fluchtet, so daß sich insgesamt eine Nut ergibt, die sich über mehrere miteinander verbundene Verteiler einer Verteilerbatterie erstreckt und die durch ihre Abmessungen entsprechend große Kräfte zerstörungsfrei aufnehmen kann. Daher kann diese Nut zur Aufnahme einer Befestigungsschiene dienen, mit der die Verteiler an einer Wand, in einem Verteilerschrank od. dgl. befestigt werden können. Insbesondere kann in Ergänzung zu der vorliegenden Erfindung vorgesehen sein, die dazu vorgesehene Befestigungsschiene ebenfalls aus Kunststoff herzustellen, wobei durch die entsprechenden Bemaßungen ausreichende Haltekräfte und eine ausreichende Stabilität der Verbindung zwischen Wand und Halteschiene einerseits sowie Halteschiene und Verteiler andererseits sichergestellt werden kann.

Weitere vorteilhafte Ausgestaltungen der Erfindung sind den Unteransprüchen entnehmbar.

Ein Ausführungsbeispiel der Erfindung wird anhand der Zeichnungen im folgenden näher erläutert. Dabei zeigt
- Fig. 1: eine Seitenansicht auf zwei miteinander verbundene gleichartige Verteiler,
- Fig. 2: eine Stirnansicht auf einen Verteiler gemäß Fig. 1,
- Fig. 3: eine Draufsicht auf einen Verteiler gemäß Fig. 1, und
- Fig. 4: eine Stirnansicht auf eine Halteschiene für die Verteiler.

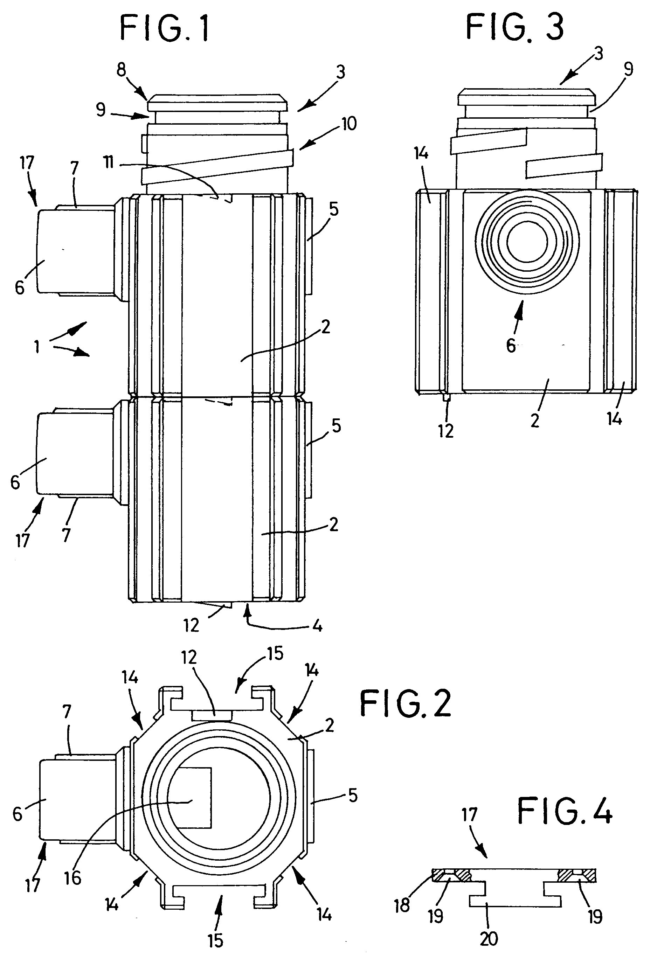

In Fig. 1 ist mit 1 allgemein ein Verteiler bezeichnet, wobei zwei gleichartige Verteiler 1 dargestellt sind. Jeder Verteiler 1 weist ein Gehäuse 2 mit einem Spitzende 3 und einem Muffenende 4 auf. An der Oberseite weist das Gehäuse 2 eine Ansatzfläche 5 für ein Ventil zur Regulierung der Durchflußmenge auf und an seiner Unterseite weist das Gehäuse 2 einen Stutzen 6 mit einem Außengewinde 7 zum Anschluß einer Leitung auf.

Das Spitzende 3 weeist an seinem freien Ende einen Rohrabschnitt 8 auf mit einer Nut 9 zur Aufnahme eines Dichtungsringes, sowie ein Außengewinde 10 mit vergleichsweise groben Gewindegängen, die für das verarbeitete Gehäusematerial kunststoffgerecht ausgeformt sind. Die Gewindesteigung ist so bemessen, daß einerseits eine schnelle Verbindung zweier gleichartiger Verteiler 1 ermöglicht wird und andererseits eine selbsthemmende Wirkung gegeben ist, die bei Temperatur- oder Innendruckbelastungen ein selbsttätiges Lösen der Verschraubung verhindert.

Im Bereich des Spitzendes 3 ist eine keilförmige Ausnehmung 11 vorgesehen, die mit einem korrespondierenden, ebenfalls keilförmigen Vorsprung 12 zusammenwirkt, wie aus Fig. 1 deutlich wird.

Bei umgekehrter Ausrichtung der Keilfläche am Vorsprung 12 oder der Gewindesteigung wäre eine widerstandsarme Verschraubungsbewegung der beiden Verteiler 1 möglich, die durch das Anliegen des Vorsprungs 12 an der Anschlagfläche der Ausnehmung 11 beendet würde.

Im dargestellten Ausführungsbeispiel ist jedoch vorgesehen, daß der Vorsprung 12 nicht allmählich in die Ausnehmung 11 eingeführt wird, sondern zunächst an das Gehäuse gepreßt wird, bis schließlich der Vorsprung 12 in die Ausnehmung 11 springen kann. Hierdurch wird eine Verrastung bewirkt, die das Lösen der Schraubverbindung zuverlässig verhindert.

Der Vorsprung 12 ist als massiver Keil dargestellt, so daß eine elastische und ggf. teils plastische Verformung des Vorsprungs 12 und / oder der benachbarten Gehäusewandung erfolgen muß, bevor der Vorsprung 12 in die Ausnehmung 11 springen kann. Ggf. kann diese Verformung erleichtert werden, indem der Vorsprung 12 nicht massiv, sondern als Federzunge ausgestaltet ist, so daß die Verschraubungsbewegung widerstandsärmer wird und damit eine kraftsparende Handhabung für den Benutzer ermöglicht wird.

Zudem kann eine derartige Federzunge bei entsprechender Ausgestaltung der Ausnehmung von außen zugänglich sein und mit Hilfe eines geeigneten Werkzeugs verformt werden, so daß bereits hergestellte, fehlerhafte Verbindungen zweier Verteiler zerstörungsfrei wieder gelöst werden können.

Durch die Verwendung von Kunststoff kann die gewünschte Elastizität des Vorsprungs auf einfache Weise bei einem vergleichsweise preiswert herstellbaren, einstückigen Spritzgußbauteil verwirklicht werden.

In der Endposition nach vollständiger Verbindung der beiden Verteiler, wenn also der Vorsprung 12 in der Ausnehmung 11 liegt, ist die miteinander fluchtende Ausrichtung der beiden Verteiler 1 sichergestellt und es sind am äußeren Umfang des Gehäuses angeordnete kleinere Nuten 14 und größere Nuten 15 ebenfalls miteinander fluchtend ausgerichtet. Die großen Nuten 15 können zur Aufnahme einer Halteschiene dienen, mit der die Verteiler 1 an einer Wand, einem Haltegerüst, in einem Verteilerschrank od. dgl. festgelegt werden können.

Die kleineren Nuten 14 können selbsklebende Beschriftungen aufnehmen oder - abweichend von dem in Fig. 2 dargestellten Ausführungsbeispiel - schwalbenschwanzförmig oder mit ähnlichen Hinterschneidungen ausgestaltet sein und ebenfalls zur Aufnahme von einzuschiebenden Materialstreifen dienen. Diese Materialstreifen können beispielsweise für eine Beschriftung verwendet werden, die vorbereitend angefertigt werden kann und an der Baustelle lediglich eingeschoben wird.

Aus Fig. 2 ist ersichtlich, daß sich ein Ventilsitz 16 gegenüber der Ansatzfläche 5 befindet und sich nicht bis zur Mitte des freien Strömungsquerschnittes in das Innere des Gehäuses 2 erstreckt und somit einen vergleichsweise geringen Strömungswiderstand darstellt.

Der Stutzen 6 weist an seinem freien Ende zunächst einen gewindelosen Abschnitt 17 auf, der eine auf den Stutzen 6 zunächst aufgeschobene Überwurfmutter führt und zentriert, bevor diese in den Eingriff mit dem Außengewinde 7 gelangt. Dabei kann das Innengewinde dieser Überwurfmutter bis an deren Vorderkante herangezogen sein. Das Innengewinde ist ohnehin geschützt. Für das Außengewinde 7 bedeutet der gewindelose Abschnitt 17 zunächst einen Schutz, da sich das Außengewinde 7 nicht bis zur vordersten Kante des Stutzens 6 erstreckt, so daß Kantendrücke oder ähnliche Verformungen des Stutzens 6 ohne Beschädigung des Gewindes 7 aufgenommen werden können.

Ein weiterer Schutz für das Außengewinde 7 ergibt sich dadurch, daß die aufgesetzte Überwurfmutter zunächst durch den gewindelosen Abschnitt 17 zentriert wird. Eine Verkantung der Mutter wird daher verhindert oder erheblich reduziert. Ein zusätzlicher Schutz des Gewindes 7 ergibt sich daraus, daß es als 7/8 Zoll-Gewinde mit verrundeten Gewindeflanken ausgebildet ist, also kunststoffgerecht vergleichsweise grob gestaltet ist, so daß kleinere Beschädigungen die Funktionssicherheit der Schraubverbindung nicht beeinträchtigen.

Die Anordnung des Dichtungsringes, z.B. eines O-Rings, in der Nut 9 am vorderen Ende des Spitzendes 3 ermöglicht aufgrund der guten Zugänglichkeit eine einfache und schnelle Montage des Dichtungsrings und bewirkt eine Trennung der Funktionen 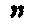 Halten" einerseits und 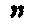 Dichten" andererseits bei der Verbindung zweier gleichartiger Verteiler 1.

Das Gewinde, welches die Haltekräfte zwischen den beiden Verteilern 1 aufnimmt, liegt vom Fluid getrennt und geschützt hinter der Dichtung, so daß es vor dem Eindringen von Fluid und Fremdstoffen geschützt ist. Verkrustungen, Verklebungen oder ähnliche Schwierigkeiten, die das Lösen zweier Verteiler 1 voneinander erschweren könnten, sind somit ausgeschlossen. Ähnliche Vorteile, allerdings bei schlechterer Montierbarkeit, sind mit einer Anordnung des Dichtungsringes im Muffenende 4 möglich, wenn der Dichtungsring fluidnah vor dem Gewinde vorgesehen ist.

Zudem wird eine unerwünschte Verformung des Dichtungsringes vermieden, z.B. eine Quetschung in Richtung der Längsachse des Spitzendes 3, wobei der Dichtungsring beschädigt werden könnte. Die Dichtung erfolgt nicht durch ein derartiges axiales Quetschen, sondern durch die radiale Anlage des Dichtungsringes in dem benachbarten Muffenende 4. Bei Temperaturwechseln und ggf. damit verbundenen axialen Bewegungen des Spitzendes im Muffenende des benachbarten Verteilers kann der Dichtungsring diesen Bewegungen frei folgen und dennoch seine Dichtungswirkung beibehalten.

In Fig. 4 ist eine Ansicht auf das Stirnende einer Halteschiene 17 dargestellt. Mit einem ersten, breiteren Steg 18 kann die Halteschiene 17 an einem Untergrund festgeschraubt werden. Zu diesem Zweck weist sie, wie aus den beiden im Schnitt dargestellten Bereichen hervorgeht, Schraubenlöcher 19 auf. Ein zweiter, kleinerer Steg 20 ist maßlich auf die Nut 15 der Verteiler 1 abgestimmt, so daß die Verteiler 1 auf den Steg 20 der zunächst am Untergrund befestigen Halteschiene 17 aufgeschoben werden können.

## Patentansprüche

1. Verteiler für wasserführende Sanitärleitungssysteme,
mit einem Gehäuse,
welches zum Anschluß weiterer gleichartiger Gehäuse ein Spitz-ende und ein Muffenende aufweist
sowie Gewindeanschlüsse für eine Leitung und ggf. für ein Ventil zur Regulierung der Durchflußmenge dieser Leitung, wobei das Gehäuse aus Kunststoff gefertigt ist,
dadurch gekennzeichnet,
daß das Spitz- (3) und das Muffenende (4) mit korrespondierenden Schraubgewinden versehen sind, die ebenfalls aus Kunststoff bestehen.

2. Verteiler nach Anspruch 1, dadurch gekennzeichnet, daß an das Muffen- (4) oder an das Spitzende (3) ein Vorsprung (12) angeformt ist,
wobei das jeweils andere Ende einen Anschlag aufweist, der beim Verbinden zweier gleichartiger Verteiler (1) die Relativbewegung der beiden Verteiler (1) zueinander begrenzt und dem der Vorsprung (12) bei vollständig miteinander verbundenen Verteilern (1) anliegt.

3. Verteiler nach Anspruch 2, dadurch gekennzeichnet, daß der Anschlag in der Kontur einer zur Aufnahme des Vorsprunges (12) dienenden Ausnehmung (11) ausgebildet ist.

4. Verteiler nach Anspruch 3, dadurch gekennzeichnet, daß der Vorsprung (12) und die Ausnehmung (11) bei vollständig miteinander verbundenen Verteilern (1), deren Trennbewegung behindernd, miteinander verrasten.

5. Verteiler nach einem der vorhergehenden Ansprüche, dadurch gekennzeichnet, daß am Gehäuse wenigstens eine Nut (15) mit einem vergleichsweise großen Querschnittsprofil versehen ist zur Aufnahme einer zur Wandmontage des Verteilers (1) dienenden Halteschiene, wobei die Nut längs vom Spitzende (3) zum Muffen-ende (4) verläuft.

6. Verteiler nach einem der vorhergehenden Ansprüche, gekennzeichnet durch einen Stutzen (6) mit Außengewinde (7) zum Anschluß der Leitung, wobei der Stutzen (6) an seinem freien Ende einen gewindelosen Abschnitt (17) aufweist.

7. Verteiler nach einem der vorhergehenden Ansprüche, dadurch gekennzeichnet, daß ein ggf. vorgesehener Ventilsitz (16) sich innerhalb des runden freien Durchgangquerschnittes bis höchstens zum Kreismittelpunkt dieses Querschnittes erstreckt.

8. Verteiler nach einem der vorhergehenden Ansprüche, gekennzeichnet durch einen Stutzen (6) mit Außengewinde (7) zum Anschluß der Leitung, wobei das Außengewinde (7) als 7/8 Zoll-Gewinde mit verrundeten Gewindeflanken ausgebildet ist.

9. Verteiler nach einem der vorhergehenden Ansprüche, gekennzeichnet durch einen Dichtungsring am Muffen- (4) oder am Spitz-ende (3) des Verteilers (1), wobei der Dichtungsring jeweils fluidnah vor dem Gewinde (10) vorgesehen ist.

10. Verteiler nach Anspruch 9, dadurch gekennzeichnet, daß der Dichtungsring als O-Ring ausgebildet ist.
